(19) Europäisches Patentamt
European Patent Office
Office européen des brevets

(11) **EP 1 910 100 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(21) Anmeldenummer: **06775784.9**

(22) Anmeldetag: **02.08.2006**

(51) Int Cl.:
**B60B 27/00** *(2006.01)*  **F16C 43/04** *(2006.01)*
**F16D 1/076** *(2006.01)*

(86) Internationale Anmeldenummer:
**PCT/DE2006/001343**

(87) Internationale Veröffentlichungsnummer:
**WO 2007/014553 (08.02.2007 Gazette 2007/06)**

(54) **RADLAGERANORDNUNG MIT STIRNVERZAHNUNG**

WHEEL BEARING ARRANGEMENT HAVING SPUR TOOTHING

SYSTEME DE PALIER DE ROUE A DENTURE DROITE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.08.2005 DE 102005036659**

(43) Veröffentlichungstag der Anmeldung:
**16.04.2008 Patentblatt 2008/16**

(73) Patentinhaber: **Schaeffler Technologies AG & Co. KG**
**91074 Herzogenaurach (DE)**

(72) Erfinder:
• **NIEBLING, Peter**
**97688 Bad Kissingen (DE)**
• **MASUR, Ernst**
**97508 Grettstadt (DE)**
• **LANGER, Roland**
**97523 Schwanfeld (DE)**

(56) Entgegenhaltungen:
**DE-A1- 19 707 766    DE-C1- 3 116 720**
**US-A- 4 893 960    US-A- 5 607 241**

**EP 1 910 100 B1**

## Beschreibung

### Gebiet der Erfindung

Die Erfindung betrifft eine Radlageranordnung mit wenigstens zwei Reihen Wälzkörpern zur Lagerung einer mit der Radlageranordnung durch ein Antriebselement antreibbaren Radnabe, wobei die Radnabe mit dem Antriebselement verbunden ist und wobei die Radnabe und das Antriebselement mittels Paarung von miteinander korrespondierenden Stirnverzahnungen formschlüssig ineinander greifen.

### Hintergrund der Erfindung

Eine derartige Radlageranordnung mit Stirnverzahnung sowie eine Funktion der Stirnverzahnung sind in der DE 31 16 720 C1 ausführlich beschrieben. Die Stirnverzahnung lässt sich, wie weiter aus der DE 31 16 720 C1 bekannt ist, beispielsweise durch spanlose Fertigung in die Radnabe einbringen.

Die Verbindung zwischen der Radnabe und dem Antriebselement mittels der Stirnverzahnung ist Bauraum sparend und lässt die Übertragung von relativ hohen Momenten zu, denen jedoch aufgrund der Abmessungen von Radlageranordnungen Grenzen gesetzt sind.

Außerdem haben die bekannten Radlageranordnungen bzw. -einheiten ein relativ hohes Gewicht und eine relativ geringe Lagersteifigkeit.

Die Lagersteifigkeit ist dabei der Widerstand, den die (Radlager-)Einheit gegen durch Belastungen hervorgerufene elastische Auslenkungen aufbringt. Aus der Lagersteifigkeit resultiert eine Kippsteifigkeit, die sich aus dem Verhältnis von Momenten aus Belastungen zu dem Kippwinkel im Radlager, z.B. in Nm/°, ergibt. Diese ist umso geringer, um so mehr das Radlager bei Belastungen verkippt, d.h. umso größer der Kippwinkel bei gleicher Belastung ist.

Die Belastungen sind die Belastungen, die im wesentlichen im Betriebszustand eines Fahrzeuges auf ein Fahrzeugrad und die dazugehörigen Radaufhängung wirken. Je geringer die Lagersteifigkeit, umso mehr bewirken die Belastungen Verkippungen des Radsystems, die sich nachteilig auf das Fahrverhalten des Fahrzeuges, insbesondere bei Kurvenfahrt, und nachteilig auf den Verschleiß der Bremse und die Funktion der Bremse auswirken.

### Zusammenfassung der Erfindung

Die Aufgabe der Erfindung ist es daher, eine steife Radlageranordnung zur Übertragung von hohen Momenten zu schaffen.

Diese Aufgabe wird durch die Radlageranordnung mit den Merkmalen gemäß dem unabhängigen Anspruch gelöst.

Die erfindungsgemäße Radlageranordnung weist wenigstens zwei Reihen Wälzkörpern zur Lagerung einer mit der Radlageranordnung durch ein Antriebselement antreibbaren Radnabe auf. Die Radnabe ist mit dem Antriebselement verbunden; die Radnabe und das Antriebselement greifen mittels einer Paarung von miteinander korrespondierenden Stirnverzahnungen formschlüssig ineinander.

An der erfindungsgemäßen Radlageranordnung ist zumindest an einer Stirnverzahnung (10) der Paarung, insbesondere der radlageranordnungsseitigen Stirnverzahnung, ein Verhältnis von Durchmesser (VTK) eines Verzahnungsteilkreises der - insbesondere radlageranordnungsseitigen - Stirnverzahnung zu Wälzkörper-Reihenabstand (RA) der wenigstens zwei Reihen Wälzkörpern größer drei realisiert, d.h.

$$(VTK / RA) > 3.$$

Dabei sei unter dem Wälzkörper-Reihenabstand (RA) der wenigstens zwei Reihen Wälzkörpern der mit der Rotationsachse der Radlageranordnung gleichgerichtete axiale Abstand (RA) zwischen den Zentren der Wälzkörper der wenigstens zwei Reihen Wälzkörpern verstanden.

Der Verzahnungsteilkreis (VTK) ist eine Differenz aus dem radialen Außendurchmesser (VDA) der Verzahnung der radlageranordnungsseitigen Stirnverzahnung und aus einer Zahnbreite (ZB) von am weitesten radial nach außen ausgebildeten Zähnen der Verzahnung der radlageranordnungsseitigen Stirnverzahnung, d.h.:

$$VTK = VDA - ZB$$

Der Außendurchmesser (VDA) ist ein gedachter, die Zähne der Verzahnung radial außen am Zahnfuß berührender Kreis um die Rotationsachse der Radlageranordnung - oder anders ausgedrückt - der Außendurchmesser (VDA) der Verzahnung ist der Durchmesser eines gedachten Kreises, durch den die am weitesten radial außen liegenden Zähne radial außen umgriffen sind.

Die umfangsseitig zueinander beabstandeten Zähne erstrecken sich von dem Kreis aus mit der Zahnbreite (ZB) weg radial zur Rotationsachse oder auch schräg zu dieser ausgerichtet nach innen.

Demnach ist die Anwendung der Erfindung auch auf Verzahnungen anwendbar die Zähne unterschiedlicher Zahnbreite ZB aufweisen oder die mit radial zueinander versetzten Zähnen gleicher Zahnbreite ZB versehen ist.

Die Zahnbreite ZB beschreibt den Abstand auf Höhe des Zahnfußes zwischen der radial äußeren Begrenzungsfläche und der radial inneren Begrenzungsfläche des jeweiligen Zahnes. Der Zahnfuß ist durch die Grenze/Konturlinie beschrieben an der der Zahn aus dem Material des Bauteiles, an dem die Verzahnung ausgebildet ist, hervorgeht bzw. in dieses übergeht.

So verläuft diese Grenze in den Zahnlücken umfangsseitig benachbarter Zähne zwischen den radial tiefsten Punkten der Lücken und von der Lücke aus radial außen und radial innen des Zahnes zu der nächsten Zahnlücke. Die Zähnezahl Z ist die gesamte Anzahl der umfangsseitig zueinander, in der Regel mit gleichmäßiger Teilung, zueinander benachbarter Zähne der Verzahnung.

Den abhängigen Ansprüchen sind jeweils bevorzugte, vorteilhafte und nicht triviale Weiterbildungen des erfinderischen Gegenstandes gemäß dem unabhängigen Anspruch zu entnehmen.

Die Erfindung betrifft in weiterbildenden Ausführungen in der Regel Radlageranordnungen, bei denen die Radnabe und das Antriebselement miteinander verbindbar und wieder voneinander lösbar sind.

In diesem "klassischen" Fall greifen die beiden Bauteile über die Stirnverzahnungen formschlüssig spielfrei ineinander und sind mit einer zentralen Schraube axial gegeneinander verspannt.

Denkbar ist auch, dass die formschlüssige Verbindung mittels der Stirnverzahnungen stoffschlüssig oder auf andere Weise unlösbar gesichert ist. Dabei ist die Verbindung an den Verzahnungen in der Regel selbsthemmend ausgelegt.

Weiterhin betrifft die Erfindung in weiterbildenden Ausführungen in der Regel Radlageranordnungen mit wenigstens einem Außenteil, mit zumindest einem oder mehreren Innenteilen und mit den wenigstens zwei Reihen Wälzkörpern, welche zwischen dem Außenteil einerseits und dem zumindest einen oder den mehreren Innenteilen andererseits angeordnet sind.

In der Regel ist an dem Außenteil jeweils zumindest eine Innenlaufbahn sowie an dem einen Innenteil bzw. an den mehreren Innenteilen jeweils wenigstens eine Außenlaufbahn für die Wälzkörper zumindest einer Wälzkörperreihe ausgebildet.

Die Radnabe ist rotationsfest mit der wenigstens einen Außenlaufbahn zumindest gekoppelt, d.h. beispielsweise, entweder die Radnabe ist das Innenteil selbst und weist dann mindestens die wenigstens eine Außenlaufbahn auf oder wenigstens ein Innenring sitzt als Innenteil auf der Radnabe.

Auch betrifft die Erfindung in weiterbildenden Ausführungen in der Regel Radlageranordnungen mit einem auf der Radnabe sitzenden Innenring - mit einem entsprechenden Innenringsitzdurchmesser - für eine der Wälzkörper-Reihen, wobei der Innenring mittels eines aus einem hohlen Abschnitt der Radnabe radial nach außen geformten Bundes axial auf der Radnabe zumindest gehalten ist.

Bei einer bevorzugten Weiterbildung ist ein Verhältnis von Durchmesser

(VTK) des Verzahnungsteilkreises der radlageranordnungsseitigen Stirnverzahnung zu Durchmesser der Wälzkörper (DW) einer der wenigstens zwei Reihen Wälzkörpern größer vier realisiert, d.h.

$$(VTK/DW) > 4.$$

Bevorzugt kann dabei der Durchmesser der Wälzkörper (DW) derjenigen der wenigstens zwei Reihen Wälzkörpern verwendet werden, welche Wälzkörperreihe axial der radlageranordnungsseitigen Stirnverzahnung am nächsten liegt. Auch kann der Durchmesser der Wälzkörper (DW) derjenigen der wenigstens zwei Reihen Wälzkörpern mit den kleinsten tragenden Wälzkörpern der Radlagereinheit verwendet werden.

Weiterhin kann bevorzugt vorgesehen sein, dass ein Verhältnis von Innenringsitzdurchmesser (DIR) zu Lagerquerschnitt (QL) größer 2,2 realisiert ist, d.h.

$$(DIR/QL) > 2,2.$$

Der Lagerquerschnitt (QL) ist durch den radialen Abstand zwischen dem Innenringsitzdurchmesser (DIR), d.h. der Lagerbohrung, beschrieben mit dem Innendurchmesser dL (freier Innendurchmesser des Innenteils), und durch den Durchmesser (DA) des Außenteils (Lageraußendurchmesser) oder bei einem nicht rotationssymmetrischen Außenteil, durch den kleinsten radialen Abstand DA von zwei sich an der Rotationsachse einander gegenüberliegen Punkten $P_1$ und $P_2$ der Außenkontur des Außenteils bestimmt und ergibt sich aus:

$$2QL = DA - d_L$$

bzw.

$$2QL = DA - DIR$$

Die Punkte $P_1$ und $P_2$ liegen dabei in einer gemeinsamen durch die Zentren der Wälzkörper einer der Reihen verlaufenden Radialebene E. Die Radialebene E verläuft durch die Reihe, über der der kleinste radiale Abstand DA ausgebildet ist.

Weiterhin kann vorgesehen sein, dass ein Verhältnis Lageraußendurchmesser (DA) zu Durchmesser (VTK) des Verzahnungsteilkreises der radlageranordnungsseitigen Stirnverzahnung kleiner 1,8 realisiert ist, d.h.

$$(DA/VTK) < 1{,}8.$$

Bevorzugt kann weiter vorgesehen sein, dass ein Verhältnis von Innenringsitzdurchmesser (DIR) zu (axialer) Lagerbreite (LB) größer 1,15 realisiert ist, d.h.

$$(DIR/LB) > 1{,}15.$$

Die axiale Lagerbreite, hier bezogen auf das Außenteil, ist durch den größten mit der Rotationsachse gleichgerichteten und zur Rotationsachse parallelen Abstand zwischen den zwei am weitesten in die gleiche Richtung voneinander entfernten Punkten der Außenkontur des Außenteiles ausgebildet, wobei Punkte vorzugsweise an den voneinander abgewandten und zumeist ringförmig ausgebildeten Stirnseiten des Außenringes ausgebildet sind.

Die axiale Lagerbreite des Außenteiles kann größer oder kleiner als die des Innenteils sein.

In einer weiteren bevorzugten Ausgestaltung ist ein Verhältnis von Innenringsitzdurchmesser (DIR) zu Durchmesser der Wälzkörper (DW) einer der wenigstens zwei Reihen Wälzkörpern größer vier realisiert, d.h.

$$(DIR/DW) > 4.$$

Bevorzugt kann dabei auch hier der Durchmesser der Wälzkörper (DW) derjenigen der wenigstens zwei Reihen Wälzkörpern verwendet werden, welche Wälzkörperreihe axial der radlageranordnungsseitigen Stirnverzahnung am nächsten liegt. Auch kann der Durchmesser der Wälzkörper (DW) derjenigen der wenigstens zwei Reihen Wälzkörpern mit den kleinsten tragenden Wälzkörpern der Radlagereinheit verwendet werden.

Auch kann vorgesehen sein, dass ein Verhältnis von Innenringsitzdurchmesser (DIR) zu Wälzkörper-Reihenabstand (RA) der wenigstens zwei Reihen Wälzkörpern größer 2,7 realisiert ist, d.h.

$$(DIR/RA) > 2{,}7.$$

Weiterhin kann vorgesehen sein, dass die Stirnverzahnung antriebsseitig beispielsweise an einem Gelenk - einer Gelenkglocke - oder an einem Wellenstummel ausgebildet ist. Seitens der Radlageranordnung kann die Stirnverzahnung an der Radnabe oder an einem auf der Radnabe sitzenden Innenring vorgesehen sein.

Alternativ dazu kann die Stirnverzahnung an einem auch mit Wälznietbund bezeichneten Bund der Radnabe ausgebildet sein. Dieser Bund ist aus einem hohlen, vorzugsweise rotationssymmetrisch ausgebildeten Abschnitt eines Vormontagezustandes der Radnabe durch plastisches Umformen radial nach außen verformt. Mit dem Bund wird die Radlageranordnung in sich gehalten und aufgrund einer Schräglageranordnung in der Regel auch axial verspannt.

Der Abschnitt in seinem Ausgangszustand vor dem Umlegen des Bundes ist bevorzugt hohlzylindrisch oder außenzylindrisch und gleichzeitig innen innenkonusförmig oder beliebig anders gestaltet.

Weitere Ausgestaltungen der Erfindungen sehen Kombinationen der vorgenannten Merkmale in beliebiger Zahl und Anordnung vor.

Alle mit der Erfindung und/oder deren Weiterbildungen betrachtete Abmessungen, Verhältnisse und Berechnungswerte geben Nennwerte ohne Berücksichtigung von fertigungsbedingten und anderen Abmessungstoleranzen wieder.

Mit einer Radlageranordnung nach der Erfindung ist eine schmale Radlageranordnung geschaffen, die jedoch durch einen großen Verzahnungsteilkreis bedingt im Durchmesser groß und somit steif ausgebildet ist. Dadurch lassen sich auch umfangsseitig mehr Zähne in der Verzahnung anordnen. Die Verzahnung ist durch höhere Antriebsmomente belastbar.

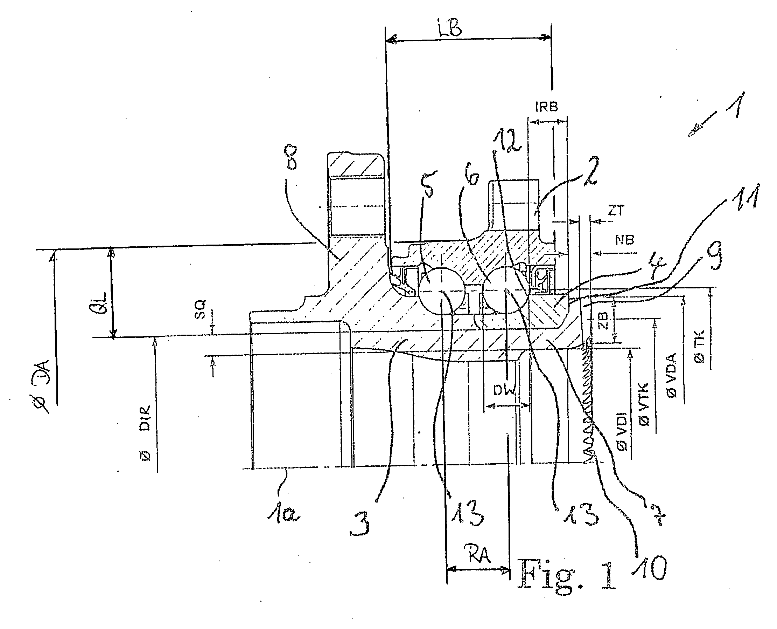

In Figur 1 ist ein Ausführungsbeispiel der Erfindung dargestellt, welches im Weiteren näher erläutert wird.

Es zeigt

Figur 1    eine Radlageranordnung gemäß einem Ausführungsbeispiel der Erfindung.

**Beschreibung der Zeichnungen**

Figur 1 zeigt ein Ausführungsbeispiel der Erfindung.

Die Radlageranordnung 1 ist aus einem fahrzeugseitigen Flansch 2, einer Radnabe 3 mit einem Radflansch 8, aus einem Innenring 4 und aus zwei Reihen 5, 6 Wälzkörpern gebildet. Die Kugeln 12 in diesem Fall beider der Reihen 5 und 6 sind mit dem Teilkreis vom Durchmesser TK um die Rotationsachse 1a der Radlagereinheit 1 angeordnet. Der Teilkreis verläuft durch die Zentren 13 der Kugeln.

Der Innenring 4 sitzt auf einem hohlen Abschnitt 7 mit der Wandstärke SQ. Der Abschnitt 7 weist den Innendurchmesser VDI auf. Einteilig mit dem Abschnitt 7 der Radnabe 3 ist ein Bund 9 ausgebildet. Der Bund 9 geht radial von dem Abschnitt 7 ab und weist außen den Außendurchmesser VDA auf.

Mit dem Bund 9 ist die Radlageranordnung 1, in diesem Fall eine Schrägkugellageranordnung, vorgespannt. Dazu liegt der Bund 9 axial an einer in Richtung Stirnverzahnung 10 gewandten Stirnseite 11 des Innenringes 4 an. Die Breite IRB der Schulter des Innenringes 4 ist durch den axialen Abstand zwischen der Stirnseite 11 und dem Übergang 12 zur Innenringlaufbahn beschrieben.

An dem Bund ist eine Stirnverzahnung 10 ausgebildet, die außen durch den Außendurchmesser VDA der Verzahnung 10 begrenzt ist. Die Stirnverzahnung ist für den Eingriff in eine entsprechend korrespondierende Stirnverzahnung des nicht dargestellten Antriebselementes vorgesehen.

In diesem Ausführungsbeispiel ist somit der Außendurchmesser der Stirnverzahnung 10 gleich groß dem Außendurchmesser des Bundes 9. Denkbar sind auch Ausführungen, bei denen der Außendurchmesser des Bundes größer ist als der Außendurchmesser der Stirnverzahnung.

Die Geometrie der Stirnverzahnung ist durch den Außendurchmesser VDA, durch die Zahnbreite ZB sowie durch den Durchmesser VTK des Teilkreises der Stirnverzahnung 10 bestimmt. Die axial gerichtete Zahntiefe ZT ist auch durch die axiale Breite NB des Bundes 9 bestimmt.

Die Geometrie der Lagerung ist durch den Lageraußendurchmesser DA, durch den Innenringsitzdurchmesser DIR, durch den Durchmesser der

Wälzkörper DW, durch die Lagerbreite LB, durch den Lagerquerschnitt QL sowie durch den Reihenabstand RA bestimmt.

## Bezugszeichen

1 Radlageranordnung

1a Rotationsachse

2 Flansch

3 Radnabe

4 Innenring

5 Reihe

6 Reihe

7 Abschnitt

8 Radflansch

9 Bund

10 Stirnverzahnung

11 Stirnseite

12 Übergang

13 Zentrum

ZT Zahntiefe

ZB Zahnbreite

TK Teilkreis

DA Lageraußendurchmesser
VTK Verzahnungsteilkreis
DW Wälzkörperdurchmesser
DIR Innenringsitzdurchmesser
QL Lagerquerschnitt
RA Wälzkörper-Reihenabstand
LB Lagerbreite, axialer Abstand
VDA Außendurchmesser
VDI Innendurchmesser
SQ Wandstärke
IRB Schulterbreite
NB axiale Bundbreite

## Patentansprüche

1. Radlagerandordnung (1) mit wenigstens zwei Reihen (5, 6) Wälzkörpern zur Lagerung einer mit der Radlageranordnung (1) durch ein Antriebselement antreibbaren Radnabe (3), wobei die Radnabe (3) mit dem Antriebselement verbunden ist und wobei die Radnabe (3) und das Antriebselement mittels einer Paarung von miteinander korrespondierenden Stirnverzahnungen (10) formschlüssig ineinander greifen, **dadurch gekennzeichnet, dass** die korrespondierenden, formschlüssigen Stirnverzahnungen selbsthemmend ausgelegt sind und zumindest an einer Stirnverzahnung (10) der Paarung, insbesondere der radlageranordnungsseitigen Stirnverzahnung, ein Verhältnis von Durchmesser (VTK) eines Verzahnungsteilkreises der insbesondere radlageranordnungsseitigen Stirnverzahnung zu Wälzkörper-Reihenabstand (RA) der wenigstens zwei Reihen Wälzkörpern größer drei, als Zahlenwert 3, realisiert ist.

2. Radlageranordnung nach Anspruch 1, **dadurch gekennzeichnet, dass** ein Verhältnis von Durchmesser (VTK) des Verzahnungsteilkreises der radlageranordnungsseitigen Stirnverzahnung zu Durchmesser der Wälzkörper (DW) einer der wenigstens zwei Reihen Wälzkörpern größer vier realisiert.

3. Radlageranordnung nach Anspruch 1 oder 2, mit einem auf der Radnabe (3) sitzenden Innenring für eine der Reihen (5, 6), wobei der Innenring mittels eines aus einem hohlen Abschnitt der Radnabe (3) radial nach außen geformten Bundes (9) axial auf der Radnabe (3) zumindest gehalten ist, **dadurch gekennzeichnet, dass** ein Verhältnis von Innenringsitzdurchmesser (DIR) zu Lagerquerschnitt (QL) größer 2,2 realisiert ist.

4. Radlageranordnung nach wenigstens einem der voranstehenden Ansprüche, **dadurch gekennzeichnet, dass** ein Verhältnis Lageraußendurchmesser (DA) zu Durchmesser (VTK) des Verzahnungsteilkreises der radlageranordnungsseitigen Stirnverzahnung kleiner 1,8 realisiert ist.

5. Radlageranordnung nach wenigstens einem der voranstehenden Ansprüche, mit einem auf der Radnabe (3) sitzenden Innenring für eine der Reihen (5, 6), wobei der Innenring mittels eines aus einem hohlen Abschnitt der Radnabe (3) radial nach außen geformten Bundes (9) axial auf der Radnabe (3) zumindest gehalten ist, **dadurch gekennzeichnet, dass** ein Verhältnis von Innenringsitzdurchmesser (DIR) zu Lagerbreite (LB) größer 1,15 realisiert ist.

6. Radlageranordnung nach wenigstens einem der voranstehenden Ansprüche, mit einem auf der Radnabe (3) sitzenden Innenring für eine der Reihen (5, 6), wobei der Innenring mittels eines aus einem hohlen Abschnitt der Radnabe (3) radial nach außen geformten Bundes (9) axial auf der Radnabe (3) zumindest gehalten ist, **dadurch gekennzeichnet, dass** ein Verhältnis von Innenringsitzdurchmesser (DIR) zu Durchmesser der Wälzkörper (DW) einer der wenigstens zwei Reihen Wälzkörpern größer vier realisiert ist.

7. Radlageranordnung nach wenigstens einem der voranstehenden Ansprüche, mit einem auf der Radnabe (3) sitzenden Innenring für eine der Reihen (5, 6), wobei der Innenring mittels eines aus einem hohlen Abschnitt der Radnabe (3) radial nach außen geformten Bundes (9) axial auf der Radnabe (3) zumindest gehalten ist, **dadurch gekennzeichnet, dass** ein Verhältnis von Innenringsitzdurchmesser (DIR) zu Wälzkörper-Reihenabstand (RA) der wenigstens zwei Reihen Wälzkörpern größer 2,7 realisiert ist.

**Claims**

1. Wheel bearing arrangement (1) having at least two rows (5, 6) of rolling bodies for mounting a wheel hub (3) which can be driven with the wheel bearing arrangement (1) by a drive element, the wheel hub (3) being connected to the drive element, and the wheel hub (3) and the drive element engaging in a form-fitting manner into one another by means of a pair of spur toothing systems (10) which correspond with one another, **characterized in that** the form-fitting spur toothing systems (10) which correspond with one another are of self-locking design and at least on one spur toothing system (10) of the pair, in particular the spur toothing system on the wheel bearing arrangement side, the ratio of the diameter (VTK) of a toothing reference circle of the spur toothing system which is, in particular, on the wheel bearing arrangement side to the rolling body row spacing (RA) of the at least two rows of rolling bodies is realized to be greater than three, as a number 3.

2. Wheel bearing arrangement according to Claim 1, **characterized in that** the ratio of the diameter (VTK) of the toothing reference circle of the spur toothing system which is on the wheel bearing arrangement side to the diameter of the rolling bodies (DW) of one of the at least two rows of rolling bodies is realized to be greater than four.

3. Wheel bearing arrangement according to Claim 1 or 2, having an inner ring which is seated on the wheel hub (3) for one of the rows (5, 6), the inner ring being at least held axially on the wheel hub (3) by means of a collar (9) which is formed radially to the outside from a hollow section of the wheel hub (3), **characterized in that** the ratio of the inner ring seat diameter (DIR) to the bearing cross section (QL) is realized to be greater than 2.2.

4. Wheel bearing arrangement according to at least one of the preceding claims, **characterized in that** the ratio of the bearing external diameter (DA) to the diameter (VTK) of the toothing reference circle of the spur toothing system which is on the wheel bearing arrangement side is realized to be smaller than 1.8.

5. Wheel bearing arrangement according to at least one of the preceding claims, having an inner ring which is seated on the wheel hub (3) for one of the rows (5, 6), the inner ring being at least held axially on the wheel hub (3) by means of a collar (9) which is formed radially to the outside from a hollow section of the wheel hub (3), **characterized in that** the ratio of the inner ring seat diameter (DIR) to the bearing width (LB) is realized to be greater than 1.15.

6. Wheel bearing arrangement according to at least one of the preceding claims, having an inner ring which is seated on the wheel hub (3) for one of the rows (5, 6), the inner ring being at least held axially on the wheel hub (3) by means of a collar (9) which is formed radially to the outside from a hollow section of the wheel hub (3), **characterized in that** the ratio of the inner ring seat diameter (DIR) to the diameter of the rolling bodies (DW) of one of the at least two rows of rolling bodies is realized to be greater than four.

7. Wheel bearing arrangement according to at least one of the preceding claims, having an inner ring which is seated on the wheel hub (3) for one of the rows (5, 6), the inner ring being at least held axially on the wheel hub (3) by means of a collar (9) which is formed radially to the outside from a hollow section of the wheel hub (3), **characterized in that** the ratio of the inner ring seat diameter (DIR) to the rolling body row spacing (RA) of the at least two rows of rolling bodies is realized to be greater than 2.7.

**Revendications**

1. Système de palier de roue (1) comprenant au moins deux rangées (5, 6) de corps de roulement pour le support sur palier d'un moyeu de roue (3) pouvant être entraîné avec le système de palier de roue (1) par un élément d'entraînement, le moyeu de roue (3) étant connecté à l'élément d'entraînement et le moyeu de roue (3) et l'élément d'entraînement venant en prise par engagement positif l'un avec l'autre au moyen d'un appariement de dentures frontales (10) se correspondant mutuellement, **caractérisé en ce que** les dentures frontales à engagement positif correspondantes sont conçues de manière autobloquante et au moins au niveau d'une denture frontale (10) de l'appariement, en particulier de la denture frontale du côté du système de palier de roue, est réalisé un rapport du diamètre (VTK) d'un cercle partiel de denture de la denture frontale notamment du côté du système de palier de roue sur une distance des rangées de corps de roulement (RA) des au moins deux rangées de corps de roulement, qui est supérieur à trois, en valeur numérique 3.

2. Système de palier de roue selon la revendication 1, **caractérisé en ce qu'**un rapport du diamètre (VTK) du cercle partiel de denture de la denture frontale du côté du système de palier de roue sur le diamètre des corps de roulement (DW) de l'une des au moins deux rangées de corps de roulement est réalisé supérieur à quatre.

3. Système de palier de roue selon la revendication 1 ou 2, comprenant une bague interne reposant sur le moyeu de roue (3) pour l'une des rangées (5, 6), la bague interne étant au moins maintenue au moyen d'un épaulement (9) formé radialement vers l'extérieur à partir d'une portion creuse du moyeu de roue (3) axialement sur le moyeu de roue (3), **caractérisé en ce qu'**un rapport du diamètre du siège de la bague interne (DIR) sur la section transversale du palier (QL) est réalisé supérieur à 2,2.

4. Système de palier de roue selon au moins l'une quelconque des revendications précédentes, **caractérisé en ce qu'**un rapport du diamètre extérieur du palier (DA) sur le diamètre (VTK) du cercle partiel de denture de la denture frontale du côté du système de palier de roue est réalisé inférieur à 1,8.

5. Système de palier de roue selon au moins l'une quelconque des revendications précédentes, comprenant une bague interne reposant sur le moyeu de roue (3) pour l'une des rangées (5, 6), la bague interne étant au moins maintenue au moyen d'un épaulement (9) formé radialement vers l'extérieur à partir d'une portion creuse du moyeu de roue (3) axialement sur le moyeu de roue (3), **caractérisé en ce qu'**un rapport du diamètre du siège de la bague interne (DIR) sur la largeur du palier (LB) est réalisé supérieur à 1,15.

6. Système de palier de roue selon au moins l'une quelconque des revendications précédentes, comprenant une bague interne reposant sur le moyeu de roue (3) pour l'une des rangées (5, 6), la bague interne étant au moins maintenue au moyen d'un épaulement (9) formé radialement vers l'extérieur à partir d'une portion creuse du moyeu de roue (3) axialement sur le moyeu de roue (3), **caractérisé en ce qu'**un rapport du diamètre du siège de la bague interne (DIR) sur le diamètre de corps de roulement (DW) de l'une des au moins deux rangées de corps de roulement est réalisé supérieur à quatre.

7. Système de palier de roue selon au moins l'une quelconque des revendications précédentes, comprenant une bague interne reposant sur le moyeu de roue (3) pour l'une des rangées (5, 6), la bague interne étant au moins maintenue au moyen d'un épaulement (9) formé radialement vers l'extérieur à partir d'une portion creuse du moyeu de roue (3) axialement sur le moyeu de roue (3), **caractérisé en ce qu'**un rapport du diamètre du siège de la bague interne (DIR) sur la distance des rangées des corps de roulement (RA) des au moins deux rangées de corps de roulement est réalisé supérieur à 2,7.

Fig. 1

EP 1 910 100 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3116720 C1